## Europäisches Patentamt
## European Patent Office
## Office européen des brevets

(19)

(11) Veröffentlichungsnummer: **0 213 305**
**B1**

(12) **EUROPÄISCHE PATENTSCHRIFT**

(45) Veröffentlichungstag der Patentschrift:
**31.01.90**

(51) Int. Cl.⁴: **B 65 G 1/137,** B 65 G 47/54

(21) Anmeldenummer: **86108581.9**

(22) Anmeldetag: **24.06.86**

(54) Vorrichtung zum Ent- und Beladen von Paletten.

(30) Priorität: **08.07.85 DE 3524344**

(43) Veröffentlichungstag der Anmeldung:
**11.03.87 Patentblatt 87/11**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**DE-A- 2 640 867**
**DE-B- 1 708 885**
**DE-U- 8 432 067**
**US-A- 3 902 427**
**US-A- 4 026 422**

**WO 83/03405**

(73) Patentinhaber: **H&K Verpackungstechnik GmbH,**
**Eichendorffstrasse 9, D-4600 Dortmund 1 (DE)**

(72) Erfinder: **Bruder, Harald R., Schwerter Strasse 346,**
**D-4600 Dortmund 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Palettenentlade- und -beladeeinrichtung, insbesondere zum Beladen von Paletten mit unterschiedlichen Gebinden, bestehend aus einer Vollpaletten-Annahmestation, einer zugeordneten Entlademaschine, einer Zwischenstation und einer nachfolgenden Belademaschine. Einrichtungen dieser Art sind bekannt.

Zur Zeit werden insbesondere in Verpackungsbetrieben mit Mehrstückverpackungen die eingehenden Aufträge unterteilt nach vollen Paletten und nach zu kommissionierenden Paletten. Die zu kommissionierenden Aufträge werden dann im Kommissionslager manuell bearbeitet. Im Lager stehen die einzelnen Artikel in Form einer Zugriff- und einer Reservepalette zur Verfügung. Die Reservepalette wird mit Hilfe einer einfachen Regalkonstruktion über der Zugriffpalette gelagert. Die mit dem Kommissionieren beauftragten Personen benötigen zu Beginn der Kommissioniertätigkeit eine leere Palette. Diese wird mit Hilfe eines Transportgerätes vom Leerpalettenplatz abgehoben und der Kommissionierstation zugeführt.

Der betreffende Kommissionierer geht dann die nach einer Häufigkeitsanalyse aufgeteilten Artikel ab und kommissioniert den betreffenden Auftrag. Nach Beendigung des Kommissioniervorganges und nach Zählen des Auftrages wird die Palette gesichert und dem Versand zur Abholung bereitgestellt bzw. auf Bereitstellbändern abtransportiert.

Es sind auch Überlegungen angestrengt worden, die einzelnen Artikel aufzureihen und mit Hilfe eines Roboters abzufahren und die einzelnen zu kommissionierenden Kartons abzunehmen. Dieses Verfahren scheitert in der Regel an der Schwierigkeit, nicht höhen- und maßgleiche Kartons zu stapeln. Aus diesem Grund muß ein Rechner vorgeschaltet werden, der den Auftrag zunächst palettengerecht zusammenstellt, d.h. Kartonzusammenstellungsmöglichkeiten durchrechnet, um zu einem für den Versand optimalen Ergebnis zu kommen. Dies erfordert eine relativ hohe Rechnerkapazität, wobei nicht sichergestellt ist, daß der Rechner zu einer endgültigen Lösung kommt bzw. eine solche Rechnerzeit benötigt wird, die nicht mehr wirtschaftlich ist. Das gleiche gilt für eine andere Variante, bei welcher vorhandene Paletten entpalettiert und in Bereitstellungsbahnen kartonweise zur Verfügung gehalten werden. Auch hier muß für den anzuschließenden Palettierer eine Optimierungsrechnung durchgeführt werden, wobei das Palettieren mit herkömmlichen Palettierern nicht möglich ist.

Hier setzt nun die Erfindung ein, die sich die Aufgabe gestellt hat, bei der Kommissionierung unterschiedlicher Artikel eine einfache und vorteilhafte Speichereinrichtung zu schaffen.

Diese Aufgabe wird gemäß der vorliegenden Erfindung bei einer Palettenentlade- und -beladeeinrichtung dadurch gelöst, daß als Speichermodul ein aus mehreren Käfigen gebildeter Umlaufpaternoster vorgesehen ist, dessen Einzelkäfige eine eine Vielzahl gleicher Gebinde reihenweise aufnehmende Ebene aufweisen, wobei diese Ebene aus quer zur Zu- und Auslaufrichtung verlaufenden Querstegen gebildet ist, die mit einer am unteren Umkehrpunkt der Käfige angeordneten heb- und senkbaren Fördervorrichtung zusammenwirken.

Dabei geht die Erfindung davon aus, daß mit dieser Vorrichtung jeweils eine komplette Lage auf der Abrufpalette mit gleichen Gebinden bestückt wird und auf diese Weise eine vereinfachte Kommissionierung und Beladung gegeben ist. Durch die Einschaltung der in den weiteren Patentansprüchen beschriebenen Vorrichtung ist praktisch jede Gebindesorte lagenweise kommissionsierbar und auf Paletten stapelbar.

Weitere Merkmale der Erfindung ergehen aus den Unteransprüchen.

Im nachfolgenden wird die Erfindung anhand eines in der Zeichnung dargestellten Ausführungsbeispiels näher erläutert.

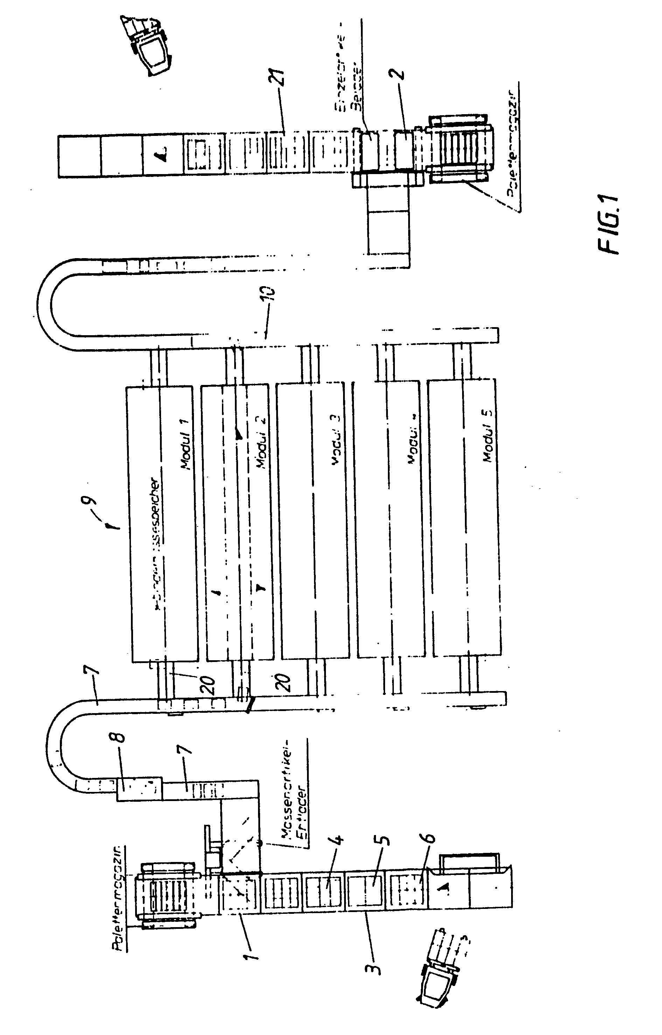

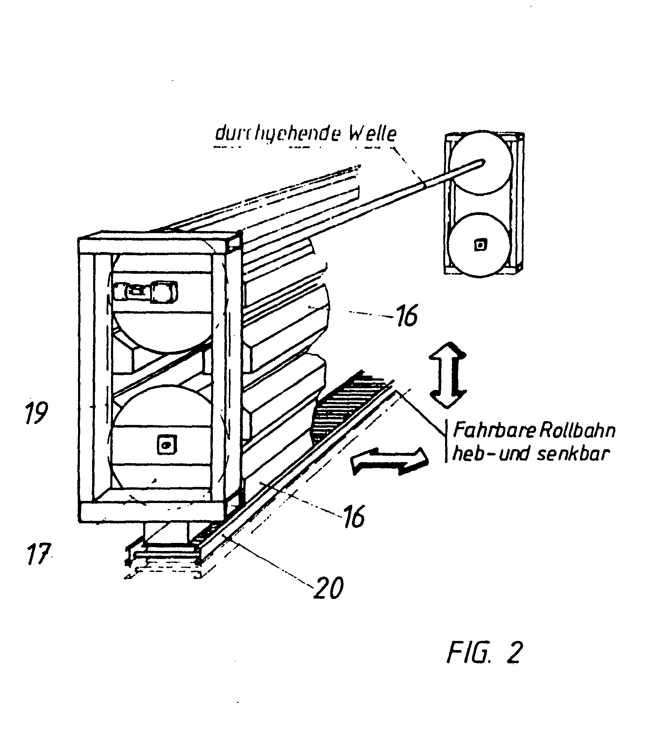

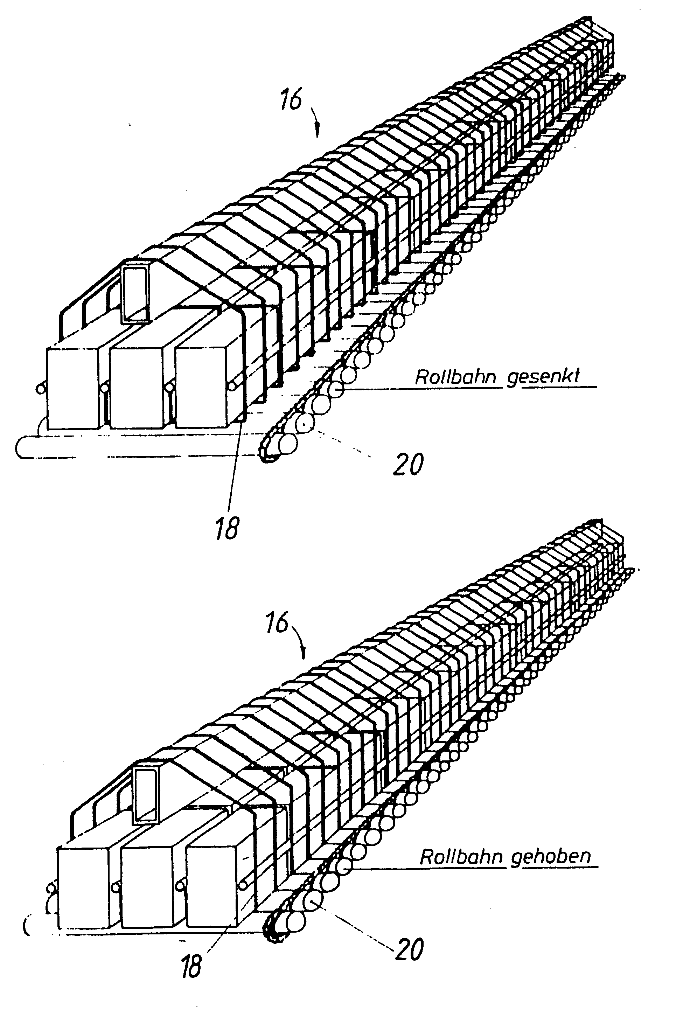

Gemäß dem in Fig. 1 dargestellten Ausführungsbeispiel ist eine Entlademaschine 1 und eine davon entfernt angeordnete Belademaschine 2 vorgesehen. Die Entlademaschine 1 weist dabei eine Vollpalettenbereitstellungsstation 3 auf, in welcher verschiedene Vollpaletten 4, 5, 6 mit jeweils einheitlichen Gebinden in Warteposition zum Zwecke des Entstapelns verharren. Von hier aus führt eine Stückguttransportbahn 7, gegebenenfalls unter Zwischenschaltung einer Drehstation 8, zu der zwischen beiden Maschinen 1 und 2 befindlichen Speicher- und Kommissionierungsstation 9. Auslaufseitig dieser Station 9 ist eine weitere Stückguttransportbahn 10 vorgesehen, welche die gewünschten Stückgüter zur dann folgenden Belademaschine 2 transportiert. Die eigentliche Speicher- und Kommissionierungsstation 9 besteht dabei aus einzelnen Modulen 11 - 15, wobei für jedes Gebinde bzw. jede Gebindegröße mindestens ein das Mehrfache solcher Gebinde aufnehmendes Speichermodul vorgesehen ist. Ein solches Speichermodul besteht aus einem aus mehreren Einzelkäfigen 16 gebildeten Umlaufpaternoster 17, wie Fig. 2 zeigt. Die Einzelkäfige 16 dieses Umlaufpaternosters 17 bzw. deren eigentliche Transportebene besteht aus quer zur Zu- und Ablaufrichtung verlaufenden Stegen 18, die mit einer am Umkehrpunkt der Paternosterbewegungsbahn 19 angeordneten heb- und senkbaren Fördervorrichtung 20 zusammenwirken, wie aus Fig. 3 ersichtlich. Dabei kann vorgesehen sein, daß ein Gebindespeichermodul selbst eine Vielzahl unterschiedlicher Gebindereihen bevorratet, die jeweils in Reihe ausfahrbar und lagenweise abrufbar sind. Zu diesem Zwecke kann die am unteren Umkehrpunkt angeordnete heb- und senkbare Rollbahn 20 längs ihrer Transportrichtung in Einzelabschnitte aufgeteilt sein, so daß mehrere Einzelspuren der betreffenden Gebinde in Reihe nebeneinander aufgenommen und abtransportiert werden können.

Zum Zwecke der Kommissionierung werden die Vollpaletten der Entlademaschine 1 zugeführt und lagenweise entleert. Die dann in Reihe hintereinander angeordneten einzelnen Stückgüter können, sofern erforderlich, in der Drehstation 8 noch gedreht und in der gewünschten Zu- und Weitertransportrichtung auf dem Stückguttransport 7 weiterbewegt werden, bis sie das für dieses Gebinde vorgesehene Modul erreichen. Von hier aus werden sie quer zur eigentlichen Förderrichtung abgedrängt und mittels der angetriebenen Fördervorrichtung 20 in dem am unteren Umkehrpunkt des Umlaufpaternosters angeordneten Käfig eingeführt. Sobald dieser Käfig mit der gewünschten Stückzahl von Gebinden besetzt ist, wird dieser in die Warteschleife verfahren, wobei der nächstfolgende leere Käfig erneut mit den gleichen Gebinden beladen werden kann. Auf diese Weise ist eine umfangreiche Bevorratung gleicher Gebinde in einem Modul gewährleistet. Sobald die betreffende Palette entleert ist, wird die nächstfolgende Palette eingefahren, die beispielsweise mit völlig anderen Gebinden bestückt ist. Auch diese Palette wird lagenweise entleert, wobei die Stückgüter ebenfalls auf der Transportbahn 7, gegebenenfalls unter einer Drehung, zu dem betreffenden weiteren zweiten Modul verfahren werden. Der Entladevorgang aller in Bevorratung stehender Paletten wird dann fortgesetzt, so daß alle Module mit jeweils gleichen, aber untereinander unterschiedlichen Gebinden besetzt sind. Die Speicher- und Kommissionierungsstation ist nun mit ausreichenden Gebinden insgesamt bestückt und kann für den eigentlichen Kommissionierungsvorgang genutzt werden. Zu diesem Zweck wird beispielsweise das Modul 1 entsprechend der Stückgutgröße bzw. der gewünschten Lagenbildung auf der Kommissionierungspalette entleert, wobei die diesbezüglichen Stückgüter auf der Stückguttransportbahn 10 in Richtung der Belademaschine 2 verfahren werden. Sodann wird auf der darin bereits in Warteposition verharrenden Palette eine komplette Lage mit gleichen Gebinden aus dem Modul 1 zusammengestellt. Im Anschluß daran erfolgt eine Entleerung eines weiteren Moduls in der gleichen Weise, wobei jeweils immer eine einer kompletten Lage entsprechende Stückzahl solcher Gebinde der Belademaschine 2 zugeführt wird, die dann eine weitere Lage aufnimmt und darauf bereit ist, die nächste Gebindesorte wieder lagenweise zu übernehmen.

Auf diese Weise kann durch Entnahme der einzelnen Gebinde aus den einzelnen Modulen der Speicher- und Kommissionierungsstation eine der jeweiligen Kommission entsprechende Palette auf einfache Weise bereitgestellt werden, ohne daß komplizierte Rechnervorgänge ausgelöst werden müßten. Es ist selbstverständlich möglich, bestimmte Gebinde gleicher Höhe, jedoch unterschiedlichen Ausmaßes entsprechend der gewünschten Kommission auch in nur einer Lage aufzunehmen. Hierzu ist es lediglich erforderlich, die Anzahl der notwendigen einzelnen Gebinde aus den einzelnen Modulen 11 - 15 abzurufen.

Die jeweils mit der gewünschten Gruppe bzw. den gewünschten Lagen von Gütern beladene Palette wird dann auf der Abtransportbahn 21 gespeichert und anschließend entnommen.

## Patentansprüche

1. Palettenentlade- und -beladeeinrichtung, insbesondere zum Beladen von Paletten mit unterschiedlichen Gebinden, bestehend aus einer Vollpaletten-Annahmestation, einer zugeordneten Entlademaschine (1), einer Zwischenstation (9) und einer nachfolgenden Belademaschine (2), dadurch gekennzeichnet, daß zwischen Entlademaschine (1) und der Belademaschine (2) mehrere die Gebinde aufnehmende Speichereinrichtungen (9) angeordnet sind, wobei für jede Gebindegröße ein das Mehrfache solcher gleicher Gebinde aufnehmendes Speichermodul (11 - 15) vorgesehen ist, in welchem die einzeln zulaufenden gleichen Gebinde gespeichert und bereitgehalten werden, und daß als Speichermodul (11 - 15) ein aus mehreren Käfigen (16) gebildeter Umlaufpaternoster vorgesehen ist, dessen Einzelkäfige (16) eine eine Vielzahl gleicher Gebinde reihenweise aufnehmende Ebene aufweisen, wobei diese Ebene aus quer zur Zu- und Auslaufrichtung verlaufenden Querstegen (18) gebildet ist, die mit einer am unteren Umkehrpunkt der Käfige (16) angeordneten heb- und senkbaren Fördervorrichtung (20) zusammenwirken.

2. Palettenentlade- und -beladeeinrichtung nach Anspruch 1, dadurch gekennzeichnet, daß mehrere solcher Gebindespeichermodule (11 - 15) für die unterschiedlichen Gebinde nebeneinander angeordnet sind.

3. Palettenentlade- und -beladeeinrichtung nach Anspruch 1, dadurch gekennzeichnet, daß ein Gebindespeichermodul (11 - 15) selbst eine Vielzahl unterschiedlicher Gebinderreihen bevorratet, die jeweils in Reihe ausfahrbar und lagenweise speicherbar sind.

4. Palettenentlade- und -beladevorrichtung nach Anspruch 1, dadurch gekennzeichnet, daß als Fördervorrichtung (20) im Bereich des unteren Umkehrpunktes eine heb- und senkbare Rollenbahn vorgesehen ist, die einerseits mit dem Zulaufförderer (10) des Beladers (2) korrespondiert.

5. Palettenentlade- und -beladeeinrichtung nach Anspruch 4, dadurch gekennzeichnet, daß die Fördervorrichtung (20) heb- und senkbar ausgebildet und quer zur Auslaufrichtung der Gebinde unter jedes Modul (11 - 15) quer verfahrbar gelagert ist.

6. Palettenentlade- und -beladeeinrichtung nach Anspruch 1, dadurch gekennzeichnet, daß die Käfigebene in Anpassung an die Gebindegröße mehrreihig ausgebildet ist und jede Reihe einzeln und/oder gemeinsam in Richtung Zulaufförderer (10) des Beladers (2) abrufbar ist.

7. Palettenentlade- und -beladeeinrichtung nach Anspruch 1, dadurch gekennzeichnet, daß jedes Speichermodul (11 - 15) eine separate Zu- und Abführrollbahn (20) aufweist, die mit weiteren Abführrollbahnen gemeinsam und/oder einzeln betätigbar ist.

## Claims

1. Apparatus for unloading and loading pallets, especially for loading pallets with different containers, comprising a station for accepting full pallets, an unloading machine (1) assigned to it, an intermediate station (9) and a subsequent loading machine (2), characterised in that, between the unloading machine (1) and the loading machine (2), several storage means (9) are arranged which receive the containers, whereby for each container size there is provided a storage module (11 - 15) which receives a multiple number of such identical containers, in which module the individually incoming containers are stored and held in readiness, and that a storage module (11 - 15) is provided taking the form of a continuous paternoster, the single cages (16) of which have one plane which receives, in rows, a large number of identical containers, said plane being constituted by transverse frames (18) lying at right angles to the infeed and outfeed direction and working in concert with a means of conveyance (20) which can be raised and lowered and which is situated at the bottom reversing point of the cages (16).

2. Apparatus for unloading and loading pallets according to claim 1, characterised in that several such container storage modules (11 - 15) are arranged next to each other for the different containers.

3. Apparatus for unloading and loading pallets according to claim 1, characterised in that a container storage module (11 - 15) itself stores a large number of different rows of containers, which in each case can be extended and stored in layers.

4. Apparatus for unloading and loading pallets according to claim 1, characterised in that, in the region of the bottom reversing point, a means of conveyance (20), which can be raised and lowered, is provided in the form of a roller conveyor which corresponds on one side with the infeed conveyor (10) of the loader (2).

5. Apparatus for unloading and loading pallets according to claim 4, characterised in that the means of conveyance (20) is constituted such that it can be raised and lowered and transversely mounted such that it can travel beneath each module (11 - 15) at right angles to the outfeed direction of the containers.

6. Apparatus for unloading and loading pallets according to claim 1, characterised in that the cage plane is constituted in several rows in conformance with the size of the containers and that each row can be called off individually and/or collectively in the direction of the infeed conveyor (10) of the loader (2).

7. Apparatus for unloading and loading pallets according to claim 1, characterised in that each storage module (11 - 15) has a separate infeed and outfeed roller conveyor (20) which can be actuated by itself and/or in concert with further outfeed roller conveyors.

## Revendications

1. Dispositif pour le déchargement et le chargement de palettes, en particulier pour le chargement de palettes avec des fûts différents, comportant une station de réception des palettes pleines, une machine de déchargement (1), une station intermédiaire (9) et une machine de chargement (2) disposée à la suite, caractérisé en ce que, entre la machine de déchargement (1) et la machine de chargement (2) sont disposées plusieurs installations de stockage (9) destinées à recevoir les fûts, dans lesquelles est prévu pour chaque taille de fût un module de stockage destiné à recevoir une pluralité de tels fûts, dans lequel les différents fûts identiques amenés de façon unitaire sont stockés et maintenus, et en ce qu'il comporte, comme module de stockage (11, 15) un dispositif sans fin déplaçable comportant plusieurs cages (16) dont chacune comporte une surface destinée à recevoir une pluralité de fûts identiques formant une rangée, cette surface étant formée de traverses (18) s'étendant transversalement à la direction d'entrée et de sortie, qui coopèrent au niveau du point de retour bas des cages (16) avec un dispositif de transport (20) déplaçable vers le haut et vers le bas.

2. Dispositif pour le déchargement et le chargement de palettes selon la revendication 1, caractérisé en ce que plusieurs modules de stockage (11, 15) sont disposés les uns à côté des autres pour les différents fûts.

3. Dispositif pour le déchargement et le chargement de palettes selon la revendication 1, caractérisé en ce qu'un module de stockage de fûts (11, 15) est agencé lui-même pour recevoir une pluralité de rangées différentes de fûts qui sont stackables en rangées sous forme dissociée et en couches.

4. Dispositif pour le déchargement et le chargement de palettes selon la revendication 1, caractérisé en ce que le dispositif transporteur (20) disposé au niveau du point de retour bas est constitué par un transporteur à rouleaux déplaçable vers le haut et vers le bas, dont extrémité correspond au transporteur d'entrée (10) du chargeur (2).

5. Dispositif pour le déchargement et le chargement de palettes selon la revendication 4, caractérisé en ce que le dispositif transporteur (20) déplaçable vers le haut et vers le bas est disposé de façon déplaçable perpendiculairement à la direction de sortie des fûts sous chaque module (11, 15).

6. Dispositif pour le déchargement et le chargement de palettes selon la revendication 1, caractérisé en ce que la surface de chaque cage est conformée en fonction des tailles des fûts des différentes rangées, et en ce que chaque rangée est actionnable de façon individuelle et/ou de façon commune dans la direction du transporteur d'entrée (10) du chargeur (2).

7. Dispositif pour le déchargement et le chargement de palettes selon la revendication 1, caractérisé en ce que chaque module de stockage (11, 15) comporte un transporteur à rouleaux spécifique d'entrée et de sortie, qui est actionnable isolément et/ou de façon simultanée avec d'autres transporteurs à rouleaux d'évacuation.

FIG.1

durchgehende Welle

16

Fahrbare Rollbahn
heb- und senkbar

19

16

17

20

FIG. 2

Rollbahn gesenkt

16

18

20

16

18

20

Rollbahn gehoben

9